Europäisches Patentamt

European Patent Office

Office européen des brevets

(11) Numéro de publication: **0 390 709**
**A2**

# (12) DEMANDE DE BREVET EUROPEEN

(21) Numéro de dépôt: 90420147.2

(22) Date de dépôt: 22.03.90

(51) Int. Cl.⁵: **B60S 1/38**

(30) Priorité: 22.03.89 FR 8904033

(43) Date de publication de la demande:
**03.10.90 Bulletin 90/40**

(84) Etats contractants désignés:
**AT BE CH DE DK ES FR GB GR IT LI LU NL SE**

(71) Demandeur: **NOVELEC**
**9, rue du Mont**
**F-25120 Maiche (Doubs)(FR)**

(72) Inventeur: **Haenni, Raymond**
**Les Joux Lavaux, Fournet Blancheroche**
**F-25140 Charquemont(FR)**

(74) Mandataire: **Perrier, Jean-Pierre et al**
**CABINET GERMAIN ET MAUREAU, B.P. 3011**
**F-69392 Lyon Cédex 03(FR)**

(54) **Procédé et moyens pour la fabrication, à la demande, d'une monture de balai d'essuie-glace équipée de sa raclette souple.**

(57) Ce procédé concerne la fabrication d'un essuie-glace équipé de sa raclette souple, monture du type constitué par un profilé dur en matière synthétique de section transversale sensiblement en "U" ou en "C" dont les bords de la fente forment moyens de maintien du bourrelet (3'a) de la raclette souple (3).

Ce procédé consiste à réaliser les montures à partir de profilé (2) à la section transversale désirée, à couper un tronçon de ce profilé à la longueur de la monture à remplacer, à aménager au moins l'une des extrémités de la monture pour former un organe de calage (5) de la raclette (3) et un organe de calage (5) de la monture dans le porte balai, à couper la raclette (1), à l'assembler à la monture, à engager cette monture dans les étriers ou ponts du porte balai et à mettre en place au moins les moyens de calage en translation (5) de la monture par rapport au porte balai.

FIG.1

EP 0 390 709 A2

## Procédé et moyens pour la fabrication, à la demande, d'une monture de balai d'essuie-glace équipée de sa raclette souple.

La présente invention concerne un procédé pour la fabrication, à la demande, d'une monture de balai d'essuie-glace, et les moyens pour sa mise en oeuvre.

Les raclettes d'essuie-glace en caoutchouc ou similaire sont généralement fixées par engagement d'un de leurs bords longitudinaux munis d'un bourrelet dans une gorge longitudinale ménagée, à cet effet, dans une monture constituée par un profilé en matière semi-rigide et élastique, telle qu'en acier ou en une matière plastique appropriée, qui est elle-même fixée, par engagement, à des étriers ou ponts portés par le porte balai.

Le plus souvent, la fixation longitudinale de la raclette à la monture est réalisée par coincement et celle de la monture aux étriers du porte balai par le fait qu'elle présente, dans des ailettes latérales, des encoches dans chacune desquelles est engagée l'une des branches de l'un des étriers, chaque profilé étant, de ce fait, spécifique à un type d'essuie glace déterminé.

Dans un autre type d'essuie-glace, la monture est constituée par un profilé en matière plastique de section transversale sensiblement en "U", dont le bord libre de chaque aile présente, au moins sur sa face interne, une ailette latérale destinée à assurer la retenue du bourrelet de bordure de la raclette souple d'essuyage et dont l'âme centrale est munie de prolongements latéraux externes formant des ailettes latérales d'engagement dans les étriers du porte balai de l'essuie-glace.

Dans les balais d'essuie-glace comportant une telle armature, la fixation axiale de la monture par rapport aux étriers du porte balai, est obtenue par des pions d'extrémités dont les tiges sont engagées dans des trous aménagés, à la fabrication, à chaque extrémité de la monture. Dans ce cas aussi, les montures sont réalisées de façon spécifique pour chaque type de balai d'essuie-glace. Compte tenu du nombre important de types différents de balais dessuie-glace, il est donc actuellement nécessaire, à ceux qui fournissent les recharges, de disposer d'un stock important de profilés différents.

La présente invention vise à remédier à cet inconvénient.

A cet effet, le procédé qu'elle concerne, consiste à réaliser les montures à partir de profilés en matière plastique extrudée à la section transversale désirée, à couper un tronçon de ce profilé à la longueur de la monture à remplacer, à aménager au moins l'une des extrémités de la monture pour former un organe de calage de la raclette d'essuyage et un organe de calage de la monture dans le porte balai, à couper la raclette d'essuyage à une longueur inférieure à celle du profilé, à engager par coulissement la raclette dans le profilé pour former la monture, à engager cette monture, par coulissement, dans les étriers ou ponts du porte balai et à mettre en place au moins les moyens de calage en translation de la monture dans le porte balai.

Ainsi, l'ensemble d'essuyage d'un balai d'essuie-glace constitué par la monture équipée de sa raclette souple, peut être remplacé très rapidement sans nécessiter, de la part de ceux qui effectuent l'opération, de posséder, en stock, un nombre d'ensembles d'essuyage pré-assemblés aussi grand que celui des types différents de balais d'essuie-glace existants. Il leur suffit de posséder, stockés en rouleaux ou autrement, coupables à la longueur désirée, des profilés adaptés à la dimension des étriers ou ponts actuellement utilisés, la raclette souple d'essuyage pouvant être, elle aussi, stockée en rouleaux ou autrement et coupée à la longueur voulue.

L'expérience a démontré que deux types de profilés sont suffisants pour couvrir le marché.

Dans une forme de mise en oeuvre, les moyens de calage en translation de la raclette dans le profilé sont constitués par des pions axiaux dont la tige est engagée dans des perçages réalisés à la demande à chacune des extrémités du profilé, après son sectionnement en longueur, et dont la tête, dépassant du profilé, est apte à constituer moyen de calage en translation de la monture sur le porte-balai.

Avec ce profilé, l'adaptation du profilé de la monture aux dimensions et moyens de maintien du porte balai, s'effectue uniquement par sectionnement et perçage de ce profilé.

De préférence, pour permettre une fabrication rapide de chaque ensemble d'essuyage, les moyens de mise en oeuvre comprennent, fixés sur les deux plateaux d'un bâti de machine, d'une part, un montage d'usinage auquel est associé un dispositif de coupe, avec poinçon mobile et, d'autre part, un montage d'usinage auquel est associé un dispositif du perçage avec foret.

Suivant une caractéristique intéressante de l'invention, le montage d'usinage pour perçage est muni, d'un tenon saillant verticalement du fond de la gorge et constituant butée de calage en position de perçage de profilé, en coopérant avec l'extrémité de ce profilé.

On obtient ainsi, automatiquement, un positionnement correct de l'extrémité du profilé sous le foret et du trou réalisé pour recevoir un pion de fixation axiale.

Suivant une variante de mise en oeuvre de ce procédé, le profilé en matière plastique extrudée, est fourni en tronçons de longueur égale à la plus grande longueur de la gamme de longueurs retenues, chaque tronçon comportant, à proximité de l'une de ses extrémités, un trou traversant son âme de part en part pour un pion de calage et, à proximité de son autre extrémité, une série de trous traversant et espacés longitudinalement, pour la mise en place d'un autre pion de calage, après ajustement en longueur du profilé par sectionnement entre deux trous voisins.

Cette disposition présente l'avantage que les armatures de balais peuvent être stockées et livrées en tronçons adaptables, par une coupe, à la longueur utile réelle du balai d'essuie-glace qu'ils sont destinés à remplacer.

Etant donné que chaque tronçon de profilé, par la découpe, est adaptable à plusieurs longueurs différentes de balais d'essuie-glace, les risques de stockage des montures invendues sont pratiquement nuls. De plus, les opérations de perçage sont ainsi évitées au garagiste qui effectue le remplacement d'une monture d'essuie-glace. Il suffit donc que ce garagiste possède un moyen de coupe à la longueur désirée, de ce tronçon d'armature et de la lame souple correspondante.

Suivant encore une variante de mise en oeuvre de ce procédé, le profilé en matière plastique extrudée destiné à la confection des armatures de balais d'essuie-glace, est muni de perforations alignées sur toute la longueur de son âme, aussitôt en aval de la buse d'extrusion, ce qui évite d'avoir à effectuer des opérations ultérieures de perçage.

Cette disposition permet la livraison et le stockage des armatures de balais d'essuie-glace sous forme de rouleaux, que le garagiste n'aura qu'à couper à la longueur voulue, avant de monter, sur l' armature ainsi obtenue, sa lame souple et les deux pions de fixation axiale.

Dans une autre variante de mise en oeuvre du procédé, après sectionnement en longueur du profilé extrudé, l'aménagement à ses extrémités des moyens de calage de la raclette consiste, pour chaque extrémité, à réaliser par déformation de son âme, un puits fermé formant un tenon saillant à l'intérieur de ce profilé.

Ces moyens de calage en translation de la raclette d'essuyage, sont, avantageusement, mais non exclusivement, associés à des moyens de calage de la monture dans le porte balai, constitués par des encoches formées par découpage des bords externes des ailes latérales prolongeant l'âme du profilé.

De toute façon, l'invention sera bien comprise, à l'aide de la description qui suit, en référence aux dessins schématiques annexés, représentant, à titre d'exemple non limitatif, une forme d'exécution des moyens pour la mise en oeuvre de ce procédé:

La figure 1 est une vue en coupe transversale d'un type de profilé destiné à constituer une armature de balai à essuie-glace, auquel s'applique le procédé de l'invention,

La figure 2 est une vue partielle en perspective du montage d'usinage destiné à la mise en oeuvre de ce profilé,

La figure 3 est une vue en perspective d'une forme d'exécution d'une machine permettant la mise en oeuvre complète de ce procédé,

La figure 4 est une vue en coupe transversale par l'arrière du montage de découpe pour la machine de figure 3,

La figure 5 est une vue en coupe suivant V-V de figure 4,

La figure 6 est une vue en coupe longitudinale du montage de perçage, pour la machine de figure 3,

La figure 7 est une vue en perspective montrant un profilé dont les extrémités sont aménagées suivant un autre procédé,

La figure 8 est une vue partielle de côté d'un aménagement de filière pour l'obtention d'une autre forme d'exécution du profilé de figure 7,

La figure 9 est une vue partielle de côté en coupe d'une extrémité de profilé montrant un autre mode de calage de la raclette dans la monture,

La figure 10 est une vue partielle en perspective d'une extrémité de profilé montrant un autre mode de montage de la monture sur le porte balai,

La figure 11 est une vue partielle en perspective, avec coupe partielle, d'une extrémité de profilé montrant, un autre mode de montage de la réglette dans le profilé.

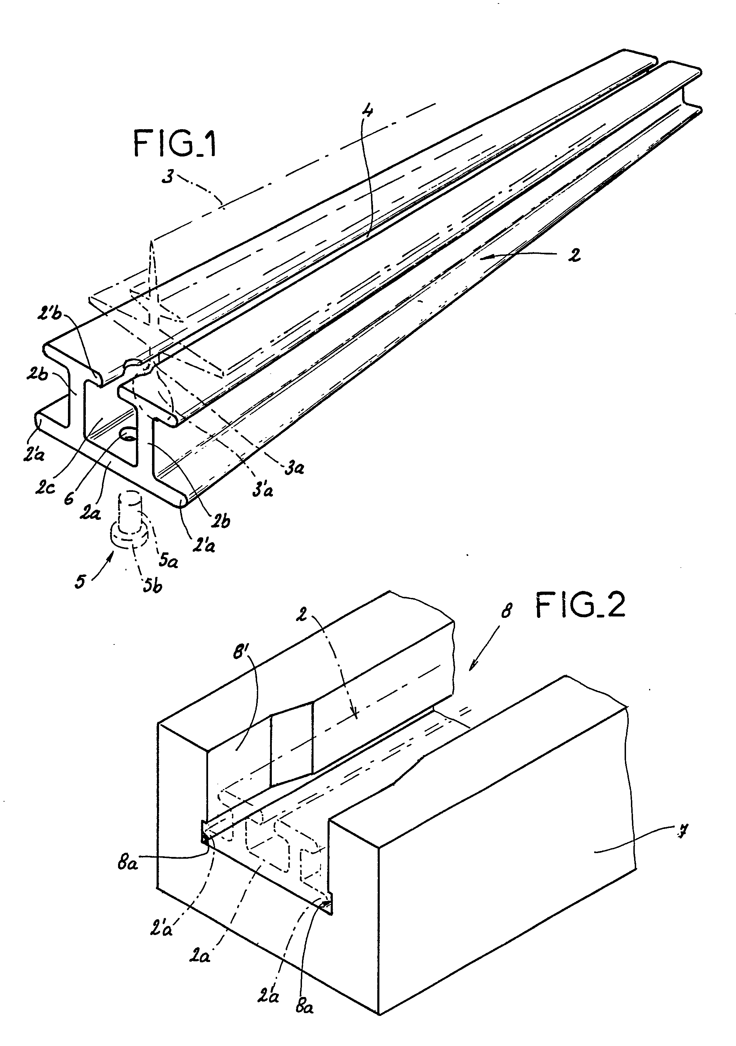

La figure 1 montre un profilé 2 en matière plastique extrudée du type auquel s'applique le procédé de l'invention. Ce profilé d'un type connu est de section transversale sensiblement en U, c'est à dire comporte une âme centrale 2a et deux ailes latérales 2b délimitant une gorge 2c destinée à recevoir et retenir un bourrelet de bordure 3'a d'une raclette souple 3, en caoutchouc ou similaire.

Pour assurer une meilleure retenue de ce bourrelet, chaque aile latérale 2b du profilé 2 est munie, au moins sur sa face interne, d'une ailette latérale interne 2'b. Une fente 4 est aménagée, entre les bords libres en regard l'un de l'autre de ces ailettes latérales internes 2'b, pour le passage de l'âme 3a de la raclette 3.

Par ailleurs, l'âme centrale 2a de ce profilé 2 est muni de prolongements latéraux externes 2'a formant des ailettes latérales d'engagement dans les étriers du porte balai de l'essuie-glace.

Dans ce type d'ensemble d'essuyage composé d'une armature constituée par un tronçon de longueur déteminée du profilé 2 équipé de sa raclette souple 3, la fixation axiale, d'une part de la raclette 3 par rapport à l'armature 2 et, d'autre part de l'armature 2 par rapport aux étriers ou ponts du porte balai d'essuie-glace (non représentés sur le dessin), est assurée par l'engagement de la tige 5a d'un pion 5 dans un trou 6 aménagé, à cet effet, à chaque extrémité de l'armature 2. Par son engagement dans la gorge 2c, la tige 5a du pion 5 assure le calage en translation longitudinal de la raclette souple 3 par rapport à l'armature 2, tandis que sa tête 5b, en butée contre l'étrier correspondant, assure un calage identique mais de l'armature 2 par rapport au porte balai.

La figure 2 montre un montage d'usinage 7 destiné à la mise en oeuvre du procédé de l'invention. Ce montage d'usinage 7 est constitué par un bloc rigide, en métal ou similaire, présentant une gorge longitudinale horizontale 8 ouverte vers le haut, destinée à servir de glissière au profilé 2 à sectionner et percer. Cette gorge a une section transversale en T renversé adaptée à celle du profilé 2, et présente donc, à la base de chacune de ses parois verticales, une rainure horizontale 8a, destinée à recevoir et à guider les ailettes latérales les plus débordantes du profilé 2, en vue d'assurer sa tenue pendant les opérations de cisaillage et de perçage auxquelles il doit être soumis.

Les ailettes latérales les plus débordantes du profilé 2, illustré sur le dessin, sont constituées par les ailettes latérales 2'a, destinées à être engagées dans les étriers ou ponts du porte balai de l'essuie-glace.

On conçoit aisément qu'après son engagement dans la gorge 8 du montage d'usinage 7, le profilé 2 destiné à constituer l'armature du balai d'essuie-glace, est parfaitement tenu transversalement et peut, de ce fait, être facilement sectionné et percé sans difficultés.

Comme le montre la figure 2, l'extrémité postérieure de la gorge 8 du montage d'usinage 7, par laquelle le profilé 2 est engagé, présente un évasement 8', facilitant son engagement.

La ligure 3 montre une machine pratique pour la mise en oeuvre complète du procédé de l'invention. Cette machine comprend essentiellement une perceuse de type établi, c'est à dire un ensemble de perçage équipé de son mandrin mobile verticalement et destiné à recevoir un foret 12 entrainé par un moteur 13, par l'intermédiaire d'un réducteur 14. Cet ensemble est fixé à l'exrémité supérieure d'une colonne verticale 15 portée par un socle, constituant le bâti de la machine.

Sur le socle 16 de cette machine, est fixé un dispositif de découpage 18, auquel est associé un premier montage d'usinage 7a du type décrit en référence à la figure 2.

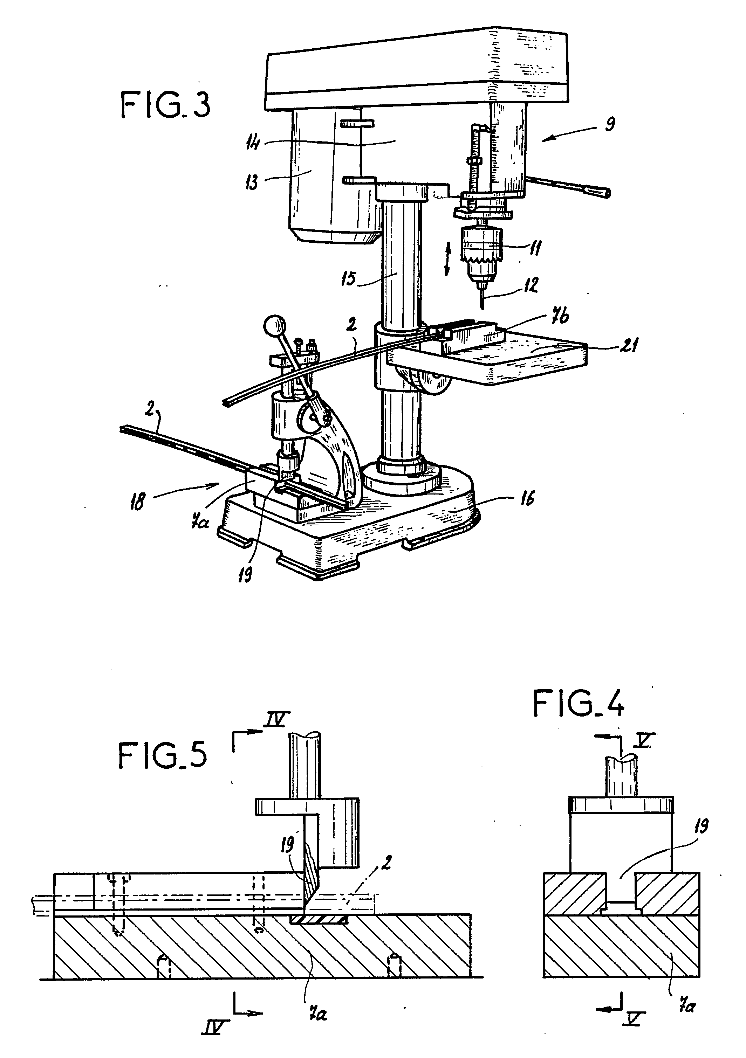

Ce dispositif de découpage 18 est constitué par une cisaille de type connu, comportant une lame mobile verticalement 19. Celle-ci, venant au ras de l'extrémité du montage d'usinage 7, correspondant à l'extrémité antérieure de la gorge 8, coopère avec l'extrémité du montage d'usinage faisant office de contre-lame fixe. Les figures 4 et 5 montrent à échelle agrandie, la structure de ce dispositif de découpage du profilé 2.

A l'ensemble de perçage 9, est associé un second montage d'usinage 7b fixé sur le plateau 21 du bâti de la machine. Ce second montage d'usinage 7b, identique au premier montage 7a par sa structure de positionnement du profilé, a pour fonction de positionner le profilé dans la zone de perçage.

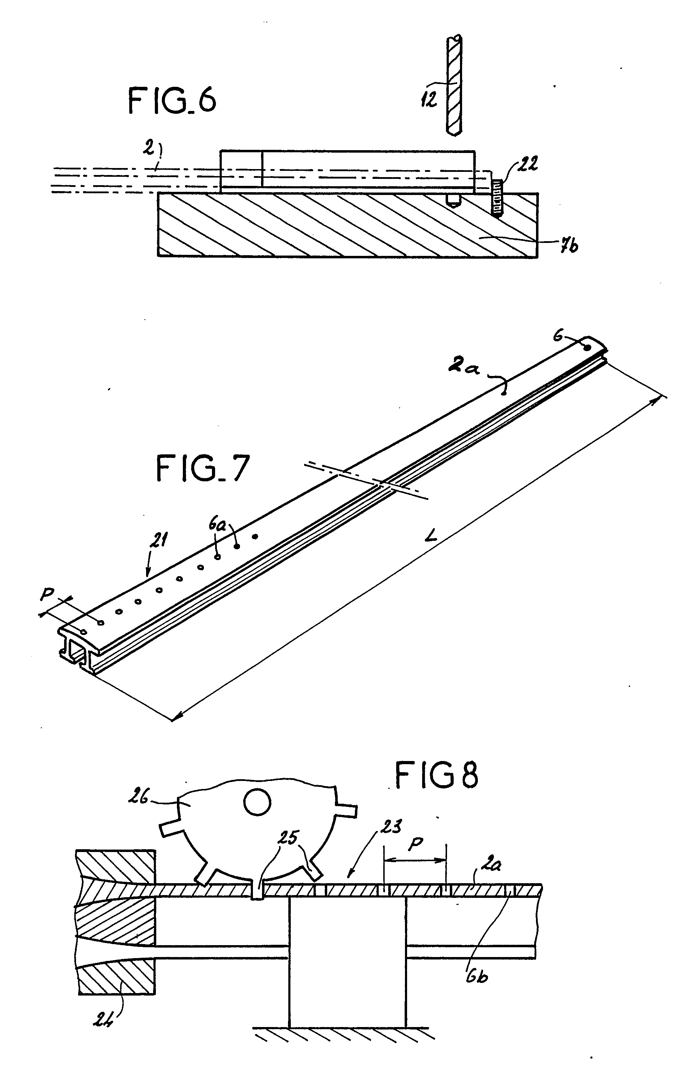

Comme le montre les figures 6 et 7, le second montage d'usinage 7b du dispositif de perçage est équipé d'une butée fixe 22 qui, constituée ici par une vis, limite l'engagement du profilé 2 dans la gorge 8 du montage d'usinage 7 à une valeur telle que l'emplacement souhaité du trou 6 soit juste à l'aplomb de l'axe du foret 12.

Grâce au procédé de l'invention et aux moyens pour sa mise en oeuvre, les opérations de rechange de l'ensemble d'essuyage 2,3 du balai d'essuie-glace, se trouvent considérablement simplifiées puisqu'elles évitent à ceux qui les effectuent, de disposer d'un stock important de tels ensembles.

En effet, lorsqu'un ensemble d'essuyage d'un balai d'essuiglace est à remplacer, il suffit, après l'avoir démonté, de mesurer sa longueur et de couper à la même longueur un tronçon de profilé 2, ayant une section transversale adaptées à celles des étriers du porte balai. Il faut ensuite percer les deux extrémités de la monture 2 ainsi obtenue pour aménger les trous 6 dont chacun est destiné à recevoir un pion 5. On peut alors mettre en place l'un de ces pions 5. Il est alors procédé au sectionnement dans un rouleau d'un tronçon de raclette 3 à la longueur désirée, longueur qui est obligatoirement inférieure à celle de l'armature 2, en raison des moyens de calage de la raclette sur cett armature. Le bourrelet 3'a de la raclette est ensuite engagé dans la gorge 2c de l'armature 2 jusqu'à ce que son extrémité d'engagement vienne en butée contre la tige 5a du pion 5, déjà mise en place.

Après cela, il faut engager l'ensemble d'essuyage, composé de l'armature 2 et de la raclette 3, dans les étriers du porte balai, en l'introduisant par son extrémité non encore équipée d'un pion 5. En fin d'engagement, c'est à dire lorsque le pion 5, préalablement mis en place, vient en butée contre l'étrier du porte balai, par lequel cet ensemble d'essuyage a été engagé, il faut alors mettre en place le second pion pour obtenir le calage longitudinal souhaité de l'armature 2 par rapport au porte balai et de la raclette souple 3 par rapport à la monture 2.

Comme on le conçoit aisément, toutes ces opérations, qui peuvent être réalisées très rapidement, ne nécessitent aucune compétence particulière de la part de celui qui les effectuent.

Dans une autre forme de mise en oeuvre du procédé et de manière à supprimer l'opération de perçage lors du montage de la monture, comme le montre la figure 7, chaque profilé est fourni en tronçons 21 de longueur L égale à la plus grande longueur de la gamme de longueurs retenues et comporte, à l'une de ses extrémités, un unique trou 6 traversant son âme 2a, tandis que son autre extrémité est munie d'une série de trous 6a espacés longitudinalement d'un pas constant p. Il est évident que le trou 6a le plus près du trou 6 correspond à la monture ayant la plus petite longueur dans la gamme de monture pouvant être obtenu à partir du tronçon 21. On conçoit aisément que, pour obtenir un profilé de la longueur désirée à partir du tronçon 21, il suffit de sectionner ce tronçon dans l'intervalle entre deux trous 6a.

Dans une autre forme de mise en oeuvre du procédé, et comme le montre la figure 8, le profilé 23 est découpé dans son âme 2a dès la sortie de la filière 24 par les poinçons 25 saillant radialement d'une molette rotative 26 disposée en aval de ladite filière. Avec ce procédé, le profilé comporte, dans son âme 2a, une succession de trous 6b espacés longitudinalement d'un pas constant p correspondant à l'intervalle entre les outils radiaux 25 de la molette 26. Un tel profilé peut être stocké en rouleaux ou sous forme de tronçons. Il faut noter que les trous 6b, réalisés au même diamètre que ceux 6 obtenus par perçage dans le procédé premièrement décrit, sont aptes à recevoir chacun un pion central. Bien entendu, comme dans la forme d'exécution précédente, le découpage en longueur du profilé s'effectue dans l'intervalle entre deux trous 6b.

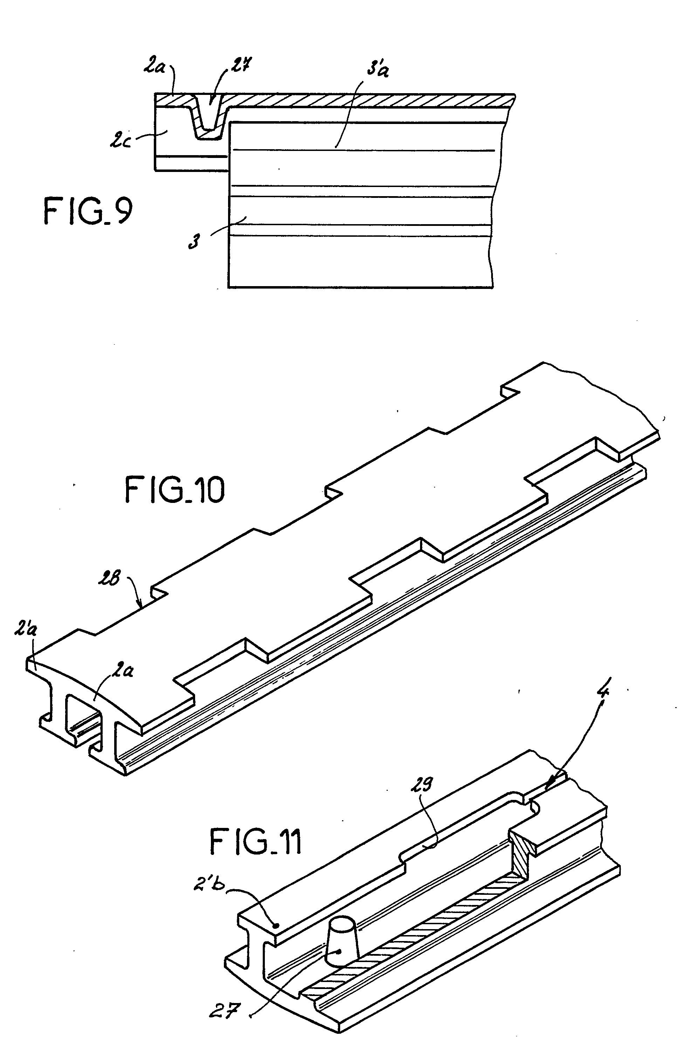

Dans une autre forme de mise en oeuvre du procédé montré à la figure 9, le calage en translation longitudinale du bourrelet 3'a de la raclette 3, est assuré à chacune des extrémités du profilé par un puits fermé 27 saillant à l'intérieur de la gorge 2c de ce profilé. Chacun de ces puits est réalisé, après sectionnement à la longueur voulue du profilé, par déformation à froid ou à chaud au moyen d'un poinçon appliqué sur la face externe de l'âme 2a de ce profilé. Dans ces conditions, le calage en translation de la monture dans le porte balai est réalisé au moyen d'encoches 28 formées par découpage dans les bords externes des ailes latérales 2'a prolongeant l'âme 2a du profilé. Ces encoches peuvent être réalisées à la demande au moyen d'un outil de poinçonnage coopérant avec un montage du type de celui 7a représenté aux figures 4 et 5. Elles peuvent aussi être réalisées immédiatement en aval de l'extrudeuse au moyen d'outils similaires à ceux 25 saillant de la mollette 26 de figure 8.

Il faut ici noter que ce mode de calage en translation du profilé sur le porte balai peut être aussi utilisé pour le placement des moyens de calage procurés par les autres procédés de montage précédemment décrits.

Dans ce qui précède, il a toujours été signalé que le deuxième pion axial mis en place ou que le deuxième puits 27 était formé, après mise en place du bourrelet 3'a de la réglette 3 dans la gorge 2c du profilé, précisément pour assurer le calage en translation dans les deux sens de la réglette à l'intérieur du profilé. Ce moyen de calage simple présente cependant un inconvénient qui est d'empêcher l'interchangeabilité de la réglette seule lorsque celle-ci est usagée et, en d'autres termes, oblige à changer l'ensemble de la monture. Pour remédier à cela, et éventuellement, permettre de remplacer la réglette sans avoir à changer la monture, l'une des mises en oeuvre du procédé, selon l'invention, prévoit de réaliser dans le profilé et par découpage des bords internes des ailettes latérales 2'b délimitant la fente 4, une lumière 29 de largeur au moins égale à celle du bourrelet 3'a de la réglette et de longueur suffisante pour tolérer la déformation de ce bourrelet lors de l'engagement de son extrémité à travers cette lumière. Il est évident que cette lumière doit au moins être réalisée à proximité de l'une des extrémités du profilé sectionné et qu'elle peut aussi être réalisée à ses deux extrémités ou à intervalles réguliers sur la totalité de la longueur du profilé.

Cet agencement permet donc de remplacer aisément la raclette lorsqu'elle est usagée sans avoir à changer le profilé et cela quels que soient les moyens de liaison de ce profilé avec le porte balai quels que soient les moyens de calage en translation de la raclette dans le profilé constituant la monture, pourvu que la longueur de la raclette soit plus courte que l'intervalle entre ces moyens de calage pour pouvoir être complètement introduite dans le profilé par la lumière 29, sans risque de coincement.

## Revendications

1. Procédé pour la fabrication, à la demande, d'une monture de balai d'essuie-glace équipée de sa raclette souple, monture du type constituée par un profilé (2) en matière plastique de section transversale sensiblement en U, dont le bord libre de chaque aile (2b) présente, au moins sur sa face interne, une ailette latérale (2'b) destinée à assurer la retenue du bourrelet (3'a) de bordure de la raclette souple d'essuyage (3), dont l'âme centrale (2a) est munie de prolongements latéraux externes formant des ailettes latérales (2'a) d'engagement dans les étriers du porte balai de l'essuie-glace, caractérisé en ce qu'il consiste à réaliser les montures à partir de profilés (2) en matière plastique extrudée à la section transversale désirée, à couper un tronçon de ce profilé (2) à la longueur de la monture à remplacer, à aménager au moins l'une des extrémités de la monture pour former un organe de calage (5-6-17) de la raclette d'essuyage (3) et un organe de calage (5-28) de la monture dans le porte balai, à couper la raclette d'essuyage (3) à une longueur inférieure à celle du profilé (2), à engager par coulissement la raclette (3) dans le profilé (2) pour former la monture, à engager cette monture, par coulissement, dans les étriers ou ponts du porte balai et à mettre en place au moins les moyens de calage en translation (5-28) de la monture par rapport au porte balai.

2. Procédé selon la revendication 1, caractérisé en ce que les moyens de calage en translation, de la raclette (3) dans le profilé (2), sont constitués par des pions axiaux (5) dont la tige (5a) est engagée dans des perçages (6) réalisés à la demande à chacune des extrémités du profilé (2), après son sectionnement en longueur, et dont la tête (5b), dépassant du profilé, est apte à constituer moyen de calage en translation de la monture sur le porte balai.

3. Procédé selon la revendication 1, caractérisé en ce que le profilé (2) en matière plastique extrudée, est fourni en tronçons de longueur égale à la plus grande longueur de la gamme de longueurs retenues, chaque tronçon comportant à proximité de l'une de ses extrémités un trou (6) traversant son âme de part en part pour un pion (5) de calage, et, à proximité de son autre extrémité, une série de trous 6a, traversant et espacés longitudinalement, pour la mise en place d'un autre pion de calage (5), après ajustement en longueur du profilé par sectionnement entre deux trous (6a) voisins.

4. Procédé selon la revendication 3, caractérisé en ce que le profilé (2) en matière plastique extrudée est muni, en aval de la filière d'extrusion, de perforations (6b) alignées sur toute la longueur de son âme, et est ajusté en longueur par sectionnement de chacune de ses extrémités entre deux trous (6b) voisins.

5. Procédé selon la revendication 1, caractérisé en ce que, après sectionnement en longueur du profilé extrudé (2), l'aménagement à ses extrémités des moyens de calage de la raclette consiste, pour chaque extrémité, à réaliser par déformation de son âme (2a), un puits fermé (27) formant un tenon saillant à l'intérieur de ce profilé.

6. Procédé selon l'une quelconque des revendications 1 à 5, caractérisé en ce que les moyens de calage en translation de la monture par rapport aux ponts ou étriers du porte balai sont constitués par des encoches (28) formées par découpage des bords externes des ailes latérales (2'a) prolongeant l'âme 2a du profilé.

7. Procédé selon l'une quelconque des revendications 1 à 6, caractérisé en ce qu'il consiste, à réaliser dans le profilé, au moins à proximité de l'une de ses extrémités, et par découpage des bords internes de la fente (4), une lumière (29) pour l'engagement dans le profilé (2) du bourrelet (3'a) de la raclette (3).

8. Moyens pour la mise en oeuvre du procédé selon l'ensemble des revendications 1 et 2, caractérisé en ce qu'ils comprennent un montage d'usinage (5) muni d'une gorge longitudinale (8) de section transversale en T inversé qui, apte à recevoir, à guider et à assurer la tenue du profilé (2) lors de sa présentation à un dispositif de coupe (18) et à un dispositif de perçage (9), est munie d'une extrémité d'entrée évasée (8').

9. Moyens selon la revendication 8, caractérisé en ce qu'ils comprennent, fixés sur les deux plateaux d'un bâti de machine, d'une part, un montage d'usinage (7a) auquel est associé un dispositif de coupe (18) avec lame mobile (19) et, d'autre part, un montage d'usinage (7b) auquel est associé un dispositif de perçage (9) avec foret (12).

10. Moyens selon l'une quelconque des revendications 8 et 9, caractérisé en ce que le montage d'usinage (7b) pour perçage est muni, d'un tenon (22) saillant verticalement du fond de la gorge 8 et constituant butée de calage en position de perçage du profilé (2), en coopérant avec l'extrémité de ce profilé.

FIG.1

FIG.2

FIG.3

14

13

9

11

15

12

76

2

21

2

18

7a

19

16

FIG.5

IV

IV

19

2

7a

FIG.4

V

19

V

7a

## FIG.6

12

2

22

7b

## FIG.7

6

2a

L

21

6a

P

## FIG 8

26

25

23

P

2a

24

6b

EP 0 390 709 A2

FIG.9

FIG.10

FIG.11